# EUROPEAN PATENT APPLICATION

(11) **EP 2 933 771 A1**
(43) Date of publication of application: **21.10.2015**
(21) Application number: 13862591.8
(22) Date of filing: 11.04.2013
(51) Int. Cl.: G06Q 30/06

(54) **METHOD AND SYSTEM FOR IDENTIFYING DEFECTIVE GOODS BASED ON USER PURCHASING BEHAVIOUR**

(30) Priority: 11.12.2012 CN 201210532123
(71) Applicant: Beijing Jingdong Century Trading Co., Ltd., Beijing 100176 (CN)
(72) Inventor: LIU, Sizhe, Beijing 100176 (CN); HE, Zhi, Beijing 100176 (CN)
(74) Representative: Charrier, Rapp & Liebau
(86) International application number: PCT/CN2013/074110
(87) International publication number: WO 2014/089944

(57) **Abstract**

The present invention provides a method and system for identifying bad commodities based on user purchase behaviors. The method comprises: selecting, by a user screening module and from a customer transaction system, a set of users who only perform a single shopping behavior within a specific time period; constructing, by the user screening module, a user-commodity purchase relationship matrix based on the set of users and specifications of the commodities purchased by all the customers; calculating, by an identifying module and based on the user-commodity purchase relationship matrix, a probability that a commodity is bad to identify bad commodities; generating, by the identifying module, a list of bad commodities based on the identified bad commodities; and providing, by a pushing module, the generated list of bad commodities to a commodity intervention system

## Description

### Technical Field

The present invention relates to a method and system for identifying bad commodities, and more specifically relates to a method and system for identifying bad commodities based on user purchase behaviors.

### Background Art

Entities of E-commerce, especially large-scale E-commerce, have the characteristics of containing numerous categories and a huge number of commodities. After purchasing a commodity, a common consumer will give a comprehensive evaluation of the commodity, e.g., satisfaction towards the seller, customer experience and the like. However, it is a difficult for an Entity of E-commerce to collect the consumers' feelings towards the commodities. On another aspect, if the consumer has a very low degree of satisfaction towards a commodity (a set of commodities), the consumer will no longer return to the E-commerce website to shop online again. Such a result is extremely unwanted by the sellers, and the cause of losing customers is that bad commodities appeared, and these commodities should be optimized by the sellers (e.g., dispatching, commodity quality, commodity price, etc.).

There are several ways for detecting bad commodities, e.g., by analyzing the user complaint data or commenting data, to thereby obtain the commodities having an obvious complaint tendency or having more negative comments.

Some general steps include: a) obtaining commenting data of a commodity; b) dividing the obtained commenting data into words and phrases to facilitate a comparison; c) obtaining several words having the highest occurrence frequency; d) determining that the commodity is a bad one if these several words belong to negative ones.

The prior art has the following defects: (1) with respect to the commenting data, when the user has a great complaint against a commodity, he or she will no longer return to the website to perform any behavior, so actually no commenting data can be obtained; (2) the users' preferences of the comments are also different, i.e., some users present an aggressive attitude towards all the purchased products, which is expressed as negative comments against all the purchased products, but these bad comments do not influence the user's succeeding purchasing behaviors. That is to say, this customer is actually still "satisfied" with the commodity and is only dissatisfied in terms of his speech rather than dissatisfied in terms of his behavior; (3) the complaint data also have problems same as those relating to the comments, and since the complaint data is centralized at the customer service system, the voice data thereof cannot be utilized, complaints against commodities fall into only a small classification among customer service complaints, and therefore the intensiveness of the data reflecting the bad commodities is comparatively weak.

Although, at the present stage, a general E-commerce website does not have so large an amount (for example, the number of unique commodities on daily sale basis is above 50,000) of commodities, along with the rapid development of the internet technology, a method and system that can facilitate rapid identification of bad commodities from among a massive amount of commodities and alerting the marketing personnel to perform a manual intervention are still needed to thereby reduce the negative marketing influence of bad commodities to the consumers.

### Summary of the invention

According to one aspect of the present invention, a method for identifying bad commodities based on user purchase behaviors is provided, the method comprising: selecting, by a user screening module and from a customer transaction system, a set of users who only perform a single shopping behavior within a specific time period; constructing by the user screening module a user-commodity purchase relationship matrix based on and the set of users and the specifications of the commodities purchased by all the customers; calculating, by an identifying module and based on the user-commodity purchase relationship matrix, a probability that a commodity is bad to identify bad commodities; generating, by the identifying module, a list of bad commodities based on the identified bad commodities; and pushing by a pushing module the generated list of bad commodities to a commodity intervention system.

According to one embodiment of the present invention, the set of users comprises a first subset of users, which is a subset of users who only perform a single shopping behavior within the specific time period and who do not perform a shopping behavior within a previous specific time period before the specific time period.

According to one embodiment of the present invention, a behavior marking module marks, before the user-commodity purchase relationship matrix is constructed, whether the first subset of users perform a specific behavior within a future specific time period after the specific time period based on the first subset of users to generate behavior data of the corresponding users.

According to another embodiment of the present invention, the first subset of users comprises a second subset of users, which is a subset of users who only perform a single shopping behavior within the specific time period, who do not perform a shopping behavior within a previous specific time period before the specific time period, and who do not perform a specific behavior within a future specific time period after the specific time period.

According to one embodiment of the present invention, the user-commodity purchase relationship matrix is constructed based on the first subset of users and the specifications of the commodities purchased by all the customers.

According to another embodiment of the present invention, the user-commodity purchase relationship matrix is constructed based on the second subset of users and the specifications of the commodities purchased by all the customers.

According to another embodiment of the present invention, the probability that a commodity is bad is further calculated based on the behavior data.

According to one embodiment of the present invention, the specific behavior is one of a shopping behavior, a login behavior or a marking-as-favorite behavior.

According to one embodiment of the present invention, the identifying module adopts an algorithm adapted to a sparse matrix environment to resolve the probability that a commodity is bad.

According to another embodiment of the present invention, the identifying module adopts a methodology of a binomial distribution hypothesis inspection to identify the bad commodities.

According to the other aspect of the present invention, a system for identifying bad commodities based on user purchase behaviors is provided, the system comprising: a user screening module configured to select from a customer transaction system a set of users who only perform a single shopping behavior within a specific time period, and construct a user-commodity purchase relationship matrix based on and the set of users and the specifications of the commodities purchased by all the customers; an identifying module configured to calculate a probability that a commodity is bad based on the user-commodity purchase relationship matrix to identify bad commodities, and generate a list of bad commodities based on the identified bad commodities; and a pushing module configured to push the generated list of bad commodities to a commodity intervention system.

According to one embodiment of the present invention, the set of users comprises a first subset of users, which is a subset of users who only perform a single shopping behavior within the specific time period and who do not perform a shopping behavior within a previous specific time period before the specific time period.

According to one embodiment of the present invention, the system further comprises a marking module configured to mark, before the user screening module constructs the user-commodity purchase relationship matrix, whether the first subset of users perform a specific behavior within a future specific time period after the specific time period based on the first subset of users to generate behavior data of the corresponding users.

According to one embodiment of the present invention, the first subset of users comprises a second subset of users, which is a subset of users who only perform a single shopping behavior within the specific time period, who do not perform a shopping behavior within a previous specific time period before the specific time period, and who do not perform a specific behavior within a future specific time period after the specific time period.

According to one embodiment of the present invention, the user-commodity purchase relationship matrix is constructed based on the first subset of users and the specifications of the commodities purchased by all the customers.

According to one embodiment of the present invention, the user-commodity purchase relationship matrix is constructed based on the second subset of users and the specifications of the commodities purchased by all the customers.

According to one embodiment of the present invention, the probability that a commodity is bad is further calculated based on the behavior data.

According to one embodiment of the present invention, the specific behavior is one of a shopping behavior, a login behavior or a marking-as-favorite behavior.

According to one embodiment of the present invention, the identifying module adopts an algorithm adapted to a sparse matrix environment to resolve the probability that a commodity is bad.

According to another embodiment of the present invention, the identifying module adopts a methodology of a binomial distribution hypothesis inspection to identify the bad commodities.

### Brief Description of the Drawings

The figures show the embodiments of the present invention and are used together with the Description for explaining the principles of the present invention. In the figures,
Fig. 1 shows a block diagram of a system for identifying bad commodities based on user purchases behavior according to one embodiment of the present invention;
Fig. 2 shows a general view of processing of identifying bad commodities based on user purchase behaviors according to one embodiment of the present invention;
Fig. 3 shows a flow chart of a method for identifying bad commodities based on user purchase behaviors according to one embodiment of the present invention;
Fig. 4 shows a flow chart of a method for identifying bad commodities based on user purchase behaviors according to another embodiment of the present invention;
Fig. 5 shows a flow chart of a method for identifying bad commodities based on user purchase behaviors according to a further embodiment of the present invention;

### Detailed Descriptions

The present invention relates to a method of a user behavior statistical system for effectively identifying bad commodities using customer purchase behaviors. The most important characteristic of this method lies in that bad commodities existing in the commodities purchased by the users can be identified only based on the customer purchase behavior data (i.e., actual transactions). The method has nothing to do with the users' subjective evaluations and transaction amounts, and avoids asymmetrical judgments caused by the inconsistency of the standards of the users' subjective evaluations and the different transaction amounts. Under an operational cycle with a day as the unit, about 20 to 30 commodities to be focused on can be identified per day. Accordingly, the traditional manner of identifying bad commodities manually, which has a very low efficiency in identification, is replaced.

As known by those skilled in the art, the commodities can be divided into different levels according to the turnover speed, and the management of the commodities according to the levels can effectively optimize presentation of the commodities and improve the economic benefits. For example, the commodities can be divided into five levels "excellent", "good", "normal", "poor" and "bad" according to the turnover speed. For example, the term "bad commodities" used herein refers to those which have poor sales and have a slow inventory turnover speed. Removing "bad commodities" not only can reduce the negative impacts on the customers but also can enable the sellers to utilize funds more effectively and allocate resources reasonably, thereby facilitating the achievement of maximal profitability index.

With respect to the bad commodities, from the perspective of the user purchase behavior, the user generally purchases a bad commodity for not having much knowledge thereof in advance. That is to say, before the user actually purchases the bad commodity, the user usually has no prior experience in purchasing this commodity, and after actually purchasing this bad commodity, the user generally will not purchase this commodity again since this commodity is a bad one. That is to say, the user purchase behavior of a bad commodity is often a single purchase behavior.

Thus, if it is desired to screen out the bad commodities, it is required to perform the screening process on the single purchase behaviors of the users. Certainly, since not all of the single purchase behaviors are directed to bad commodities, it is required to perform an analysis and calculation of the probability that a commodity is a bad one to determine whether a commodity is indeed a bad one. The method and system for identifying bad commodities based on user purchase behaviors of the present invention can accurately screen out the bad commodities and achieve good effects in practical applications.

The embodiments of the present invention are described in detail below by taking the Drawings of the Description into consideration:

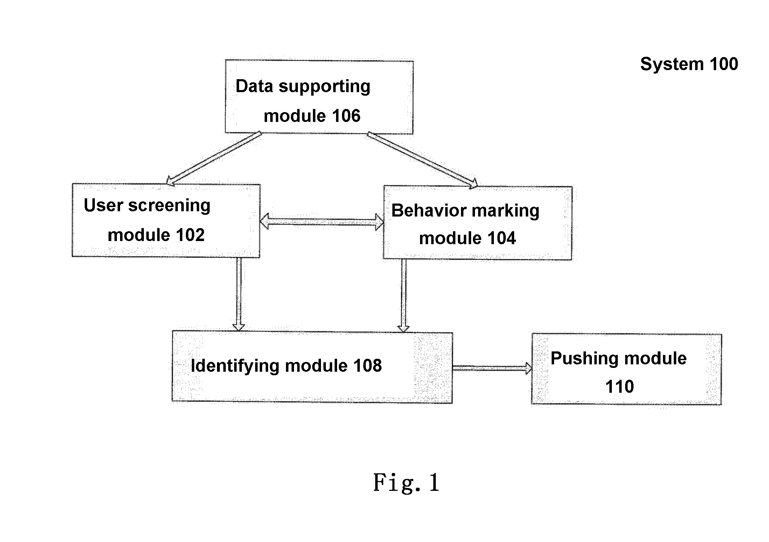

Fig. 1 shows a block diagram of a system 100 for identifying bad commodities based on user purchase behaviors according to one embodiment of the present invention. As shown in Fig. 1, the system 100 comprises a user screening module 102, a behavior marking module 104, a data supporting module 106, an identifying module 108 and a pushing module 110.

The user screening module 102 is used for screening out a set of users N1 meeting a preset condition based on the specifications of the commodities purchased by all the customers. For example, the user screening module 102 can select a set of users who perform a single shopping behavior within a specific time period. Then, the user screening module 102 can generate a user-commodity purchase relationship matrix M based on the specifications of the commodities purchased by all the customers and the set of users N1 screened out by the user screening module 102, and transmit the generated the user-commodity purchase relationship matrix M to the identifying module 108.

Preferably, the user screening module 102 can further select from the selected set of users N1 a first subset of users N2, which is a subset of users who only perform a single shopping behavior within the specific time period and who do not perform a shopping behavior within a previous specific time period before the specific time period. In this case, the user screening module 102 can generate the user-commodity purchase relationship matrix M based on the first subset of users N2 and the specifications of the commodities purchased by all the customers.

More preferably, the user screening module 102 can select from the first subset of users N2 a second subset of users N3, which is a subset of users who only perform a single shopping behavior within the specific time period, who do not perform a shopping behavior within a previous specific time period before the specific time period, and who do not perform a specific behavior within a future specific time period after the specific time period. In this case, the user screening module 102 can generate the user-commodity purchase relationship matrix M based on the specifications of the commodities purchased by all the customers and the second subset of users N3.

Preferably, in the case of the first subset of users N2 being selected, the behavior marking module 104 marks whether the users perform a specific behavior within a future specific time period after the specific time period based on the information of the first subset of users N2 screened out by the user screening module 102. For example, if the users perform a specific behavior within a future specific time period, the mark is made as 1, and on the contrary, the mark is made as 0. For example, the specific behavior refers to whether the users screened out by the user screening module 102 perform a purchase behavior within a future specific time period. Alternatively, the specific behavior can refer to whether the users screened out by the user screening module 102 perform a behavior relating to the users performing a purchase, such as a login behavior or a marking-as-favorite behavior, within a future specific time period.

The performances of the user screening module 102 and the purchase behavior marking module 104 depend on the data supporting module 106. The data supporting module 106 is used for providing stable data and model supports for the user screening module 102 and the purchase behavior marking module 104, thereby guaranteeing a normal operation of the system and achievement of the application.

The identifying module 108 is used for calculating a probability that a commodity is bad based on the user-commodity purchase relationship matrix received from the user screening module 102 and/or corresponding behavior data received from the behavior marking module 104.

The identifying module 108 generates a list of bad commodities after identifying the bad commodities. Then, the pushing module 110 pushes the generated list of bad commodities to a commodity intervention system, whereby further manual interventions can be performed by personnel in marketing and quality inspection departments of a company.

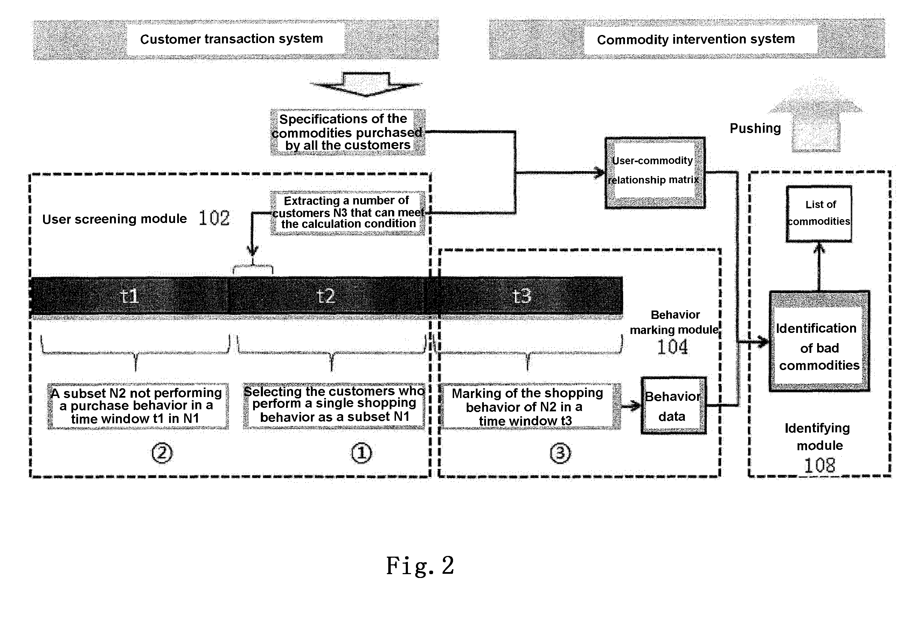

Fig. 2 shows a general view of processing of identifying bad commodities based on user purchase behaviors according to one embodiment of the present invention.

For example, as shown in Fig. 2, the user screening module 102 firstly selects a set of users N1 who perform a single shopping behavior within a specific time period (the time period t2 as shown in Fig. 2) from the customer transaction system, and the purchase behaviors of these users are the main bases for identifying abnormal commodities. Then, the user screening module 102 selects a subset of users N2 who meet the requirement of not performing a shopping behavior within a previous specific time period (the time period t1 as shown in Fig. 2) from the set of users N1.

The behavior marking module 104 can mark whether the subset of users N2 perform a specific behavior within a future specific time period (the time period t3 as shown in Fig. 2) after the specific time period based on the subset of users N2 screened out by the user screening module 102, and generate behavior data as an input of the identifying module 108. In the example shown in Fig. 2, the specific behavior refers to whether a user screened out by the user screening module 102 performs a purchase behavior within a future specific time period t3. If the user performs a purchase behavior, the mark is made as 1, and if the user does not perform a purchase behavior, the mark is made as 0.

Next, the user screening module 102 extracts a subset of users N3 from the subset of users N2 (generally one day, rolling calculation) according to the behavior data marked by the behavior marking module 104 and/or the operational capability of the system. Then, based on the specifications of the commodities purchased by all the customers and the subset of users N3 screened out by the user screening module 102, the user screening module 102 constructs a user-commodity purchase relationship matrix M (a matrix having 40,000 customers and 50,000 commodities approximately occupies a memory space of 15Gb in a 64-bit operating system) of the subset of users N3 as an input of the identifying module 108.

The structure of the user-commodity purchase relationship matrix M, for example, can be shown as the following matrix:

| | p1 | p2 | p3 | p4 | p5 | p6 | p7 | p8 | p9 | p10 |
|---|---|---|---|---|---|---|---|---|---|---|
| u1 | 0 | 0 | 0 | 1 | 1 | 0 | 0 | 0 | 0 | 0 |
| u2 | 0 | 0 | 1 | 1 | 0 | 0 | 0 | 1 | 0 | 0 |
| u3 | 1 | 1 | 0 | 0 | 0 | 0 | 0 | 0 | 1 | 0 |
| u4 | 1 | 0 | 0 | 1 | 0 | 0 | 0 | 0 | 0 | 0 |
| u5 | 0 | 1 | 0 | 0 | 0 | 1 | 0 | 0 | 0 | 0 |
| u6 | 0 | 0 | 1 | 0 | 0 | 0 | 0 | 0 | 1 | 0 |
| u7 | 0 | 1 | 0 | 0 | 0 | 0 | 1 | 0 | 0 | 1 |
| u8 | 1 | 0 | 0 | 0 | 1 | 0 | 0 | 0 | 0 | 0 |
| u9 | 0 | 0 | 0 | 1 | 0 | 0 | 0 | 0 | 1 | 0 |
| u10 | 0 | 0 | 1 | 0 | 0 | 0 | 0 | 1 | 0 | 1 |

With respect to this matrix, the rows represent users, and the columns represent commodities. If the user purchases a particular commodity, the corresponding position in this matrix is marked as 1, and on the contrary, the position is marked as 0. Taking the first item as an example, the user u1 purchases two commodities p4 and p5.

After the above two parts of data (i.e., the user-commodity purchase relationship matrix M and the behavior data) serving as the inputs of the identifying module 108 are completely collected, the identifying module 108 needs to calculate the probability that a commodity is bad to generate a list of bad commodities, so that the degree of badness of a commodity can be determined based on the probability.

Since in the user-commodity purchase relationship matrix M, only a very small part of coefficients are non-zero (i.e., the majority of the coefficients are strictly equal to zero), an algorithm adapted to a sparse matrix environment can be used to resolve the probability that a commodity is bad. However, as known by those skilled in the art, any proper algorithm that can calculate the probability that a commodity is bad can be adopted.

In one embodiment, the identifying module 108 can adopt an LARS algorithm to process the inputted user-commodity purchase relationship matrix M and behavior data to perform a coordinated calculation to obtain the probability that a commodity is bad to thereby achieve the object of identifying bad commodities. Preferably, the identifying module 108 can adopt an LASSO (Least Absolute Shrinkage and Selection operator) algorithm adapted to a sparse matrix environment to calculate the probability that a commodity is bad.

In the case that the LASSO algorithm used to calculate the probability that a commodity is bad, the calculated coefficients of the commodities are all negative numbers, and the magnitude of each absolute value thereof represents the degree of badness of a commodity. As shown in Table 1, the commodity item II obviously has a considerably higher badness than the commodity item I, and is the commodity to be intervened first.

**Table 1**

| | | | | |
|---|---|---|---|---|
| Commodity ID | 123456789 | 987654321 | ······ | ······ |
| Commodity name | Commodity item I | Commodity item II | ······ | ······ |
| Score | -0.0564 | -0.1205 | ······ | ······ |

Alternatively, the identifying module 108 can use a methodology of a binomial distribution hypothesis inspection of the commodity levels to calculate whether the commodity is one having a unilateral significant difference.

For example, with respect to 30 purchase behaviors, five customers perform a purchase behavior within the time period t3, and then the P value of the unilateral binomial distribution hypothesis inspection is 0.0001625. Accordingly, it is considered that the probability of buying a bad commodity is less than 0.5, i.e., it is considered that this commodity is a bad one.

However, compared with the adoption of the algorithm adapted to the sparse matrix environment, this solution has a relatively time consuming calculating process, and also has a relatively higher consumption of system resources. Besides, this solution does not take into consideration of the circumstance where different customers simultaneously purchase the commodities. In other words, this solution is a relatively simplified version of the present invention.

After the identifying module 108 generates the list of bad commodities, the pushing module 110 pushes the generated list of bad commodities to the commodity intervention system for personnel in marketing and quality inspection departments of a company to perform manual interventions.

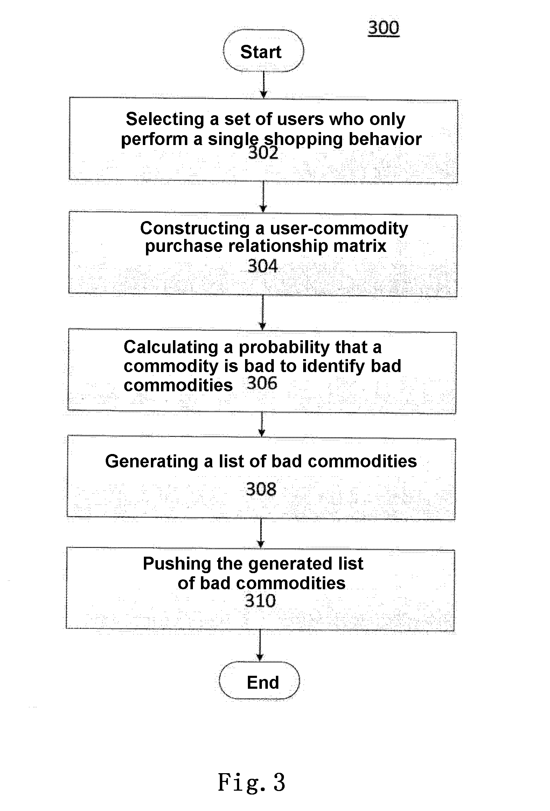

Fig. 3 shows a flow chart of a method 300 for identifying bad commodities based on user purchase behaviors according to one embodiment of the present invention.

As shown in Fig. 3, at step 302, the user screening module 102 selects from a customer transaction system a set of users N1 who only perform a single shopping behavior within a specific time period. At step 304, the user screening module 102 constructs a user-commodity purchase relationship matrix M based on the set of users N1 and the specifications of the commodities purchased by all the customers. At step 306, the identifying module 108 calculates a probability that a commodity is bad based on the user-commodity purchase relationship matrix M to identify bad commodities. At step 308, the identifying module 108 generates a list of bad commodities based on the identified bad commodities. At step 310, the pushing module 110 pushes the generated list of bad commodities to the commodity intervention system. Then, the method 300 ends.

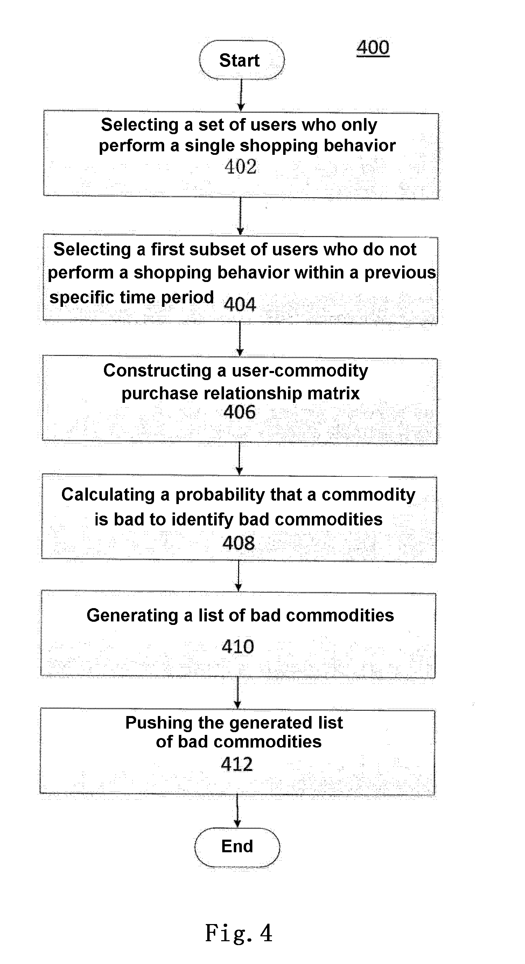

Fig. 4 shows a flow chart of a method 400 for identifying bad commodities based on user purchase behaviors according to another embodiment of the present invention.

As shown in Fig. 4, at step 402, the user screening module 102 selects from a customer transaction system a set of users N1 who only perform a single shopping behavior within a specific time period. At step 404, the user screening module 102 selects from the set of users N1 a first subset of users N2 who meet the requirement of not performing a shopping behavior within a previous specific time period before the specified time period. At step 406, the user screening module 102 constructs a user-commodity purchase relationship matrix M based on the specifications of the commodities purchased by all the customers and the first subset of users N2 screened out by the user screening module 102. At step 408, the identifying module 108 calculates a probability that a commodity is bad based on the user-commodity purchase relationship matrix M to identify bad commodities. At step 410, the identifying module 108 generates a list of bad commodities based on the identified bad commodities. At step 412, the pushing module 110 pushes the generated list of bad commodities to the commodity intervention system. Then, the method 400 ends.

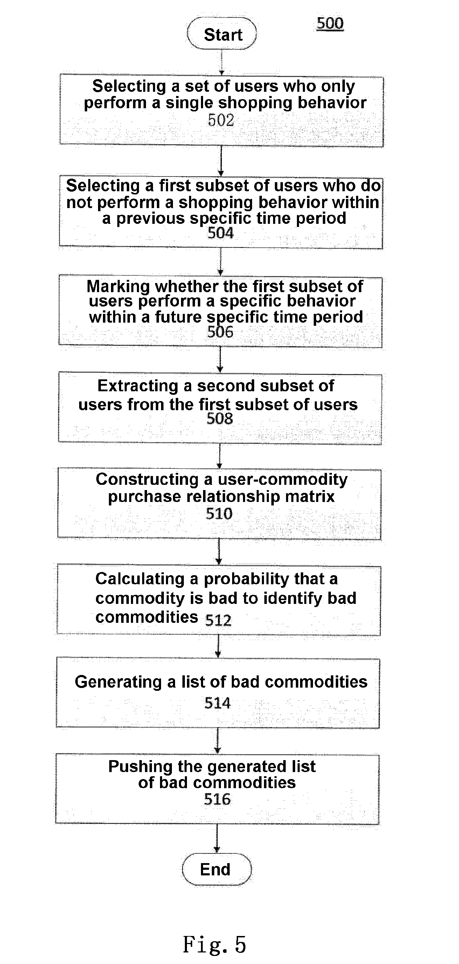

Fig. 5 shows a flow chart of a method 500 for identifying bad commodities based on user purchase behaviors according to a further embodiment of the present invention.

As shown in Fig. 5, at step 502, the user screening module 102 selects from a customer transaction system a set of users N1 who perform a single shopping behavior within a specific time period. At step 504, the user screening module 102 selects from the set of users N1 a first subset of users N2 who meet the requirement of not performing a shopping behavior within a previous specific time period before the specified time period. At step 506, the behavior marking module 104 can mark, based on the first subset of users N2, whether the first subset of users N2 perform a specific behavior within a future specific time period after the specific time period. At step 508, the user screening module 102 extracts a second subset of users N3 from the first subset of users N2 based on the behavior data marked by the behavior marking module 104 and the operational capability of the system. Next, at step 510, the user screening module 102 constructs a user-commodity purchase relationship matrix M based on the specifications of the commodities purchased by all the customers and the second subset of users N3 screened out by the user screening module 102. At step 512, the identifying module 108 calculates a probability that a commodity is bad based on the user-commodity purchase relationship matrix M and the behavior data to identify bad commodities. At step 514, the identifying module 108 generates a list of bad commodities based on the probabilities of the identified bad commodities. At step 516, the pushing module 110 pushes the generated list of bad commodities to the commodity intervention system. Then, the method 500 ends.

The technical solution of the present invention brings many beneficial effects.

For example, as seen from the commercial effect of the actual application of the present invention:
(1) The present invention matches user behaviors more accurately, and is not influenced by the emotional factors of each customer. Besides, the identifying process is better standardized and streamlined. Therefore, an effective, rapid and convenient platform is provided for intervening on bad commodities in daily operation.
(2) With respect to the application of the method and system for identifying bad commodities with the unit being a day, 5-10 kinds of bad commodities can be recorded per day, and 100-150 customers can be covered on average. Conservatively estimated, assuming that each customer makes a second commodity purchase in a year, and each customer spends 250 yuan per transaction, a sales volume of about 9,000,000-13,500,000 can be reached.
(3) Negative impacts of the bad commodities on the customers are effectively reduced. As issues in commodities may result in a flow of dissatisfied customers to the competitors, and the dissatisfied customers may spread their dissatisfactions to the people around them, the implementation of this method and system will effectively avoid bringing about dissatisfied customers continuously caused by the bad commodities, prevent these customers from flowing towards the competitors, and reduce to the lowest the negative impacts they have on the other (potential) customers.

The above embodiments are only preferred embodiments of the present invention, and are not used for restricting the present invention. It is obvious to those skilled in the art that they can perform various amendments and changes to the embodiments of the present invention in the case of not breaking away from the spirit and scope of the present invention. Thus, the present invention aims to cover all of such amendments or modifications falling within the scope of the present invention as defined in the claims.

### Fig. 1

### System 100

Data supporting module 106
User screening module 102
Behavior marking module 104
Identifying module 108
Pushing module 110

### Fig. 2

Customer transaction system
Commodity intervention system
Specifications of the commodities purchased by all the customers
User screening module
Extracting a number of customers N3 that can meet the calculation condition
User-commodity relationship matrix

### Behavior marking module

① Selecting the customers who perform a single shopping behavior as a subset N1
② A subset N2 not performing a purchase behavior in a time window tl in N1
③ Marking of the shopping behavior of N2 in a time window t3

### Behavior data

Pushing
List of commodities
Identification of bad commodities
Identifying module

### Fig. 3

### Start

302: Selecting a set of users who only perform a single shopping behavior
304: Constructing a user-commodity purchase relationship matrix
306: Calculating a probability that a commodity is bad to identify bad commodities
308: Generating a list of bad commodities
310: Pushing the generated list of bad commodities
End

### Fig. 4

### Start

402: Selecting a set of users who only perform a single shopping behavior
404: Selecting a first subset of users who do not perform a shopping behavior within a previous specific time period
406: Constructing a user-commodity purchase relationship matrix
408: Calculating a probability that a commodity is bad to identify bad commodities
410: Generating a list of bad commodities
412: Pushing the generated list of bad commodities
End

### Fig. 5

### Start

502: Selecting a set of users who only perform a single shopping behavior
504: Selecting a first subset of users who do not perform a shopping behavior within a previous specific time period
506: Marking whether the first subset of users perform a specific behavior within a future specific time period
508: Extracting a second subset of users from the first subset of users
510: Constructing a user-commodity purchase relationship matrix
512: Calculating a probability that a commodity is bad to identify bad commodities
514: Generating a list of bad commodities
516: Pushing the generated list of bad commodities
End

## Claims

1. A method for identifying bad commodities based on user purchase behaviors, the method comprising:
selecting, by a user screening module and from a customer transaction system, a set of users who only perform a single shopping behavior within a specific time period;
constructing, by the user screening module, a user-commodity purchase relationship matrix based on the specifications of the commodities purchased by all the customers and the set of users;
calculating, by an identifying module and based on the user-commodity purchase relationship matrix, a probability that a commodity is bad to identify bad commodities;
generating, by the identifying module, a list of bad commodities based on the identified bad commodities; and
pushing, by a pushing module, the generated list of bad commodities to a commodity intervention system.

2. The method according to claim 1, wherein the set of users comprises a first subset of users, which is a subset of users who only perform a single shopping behavior within the specific time period and who do not perform a shopping behavior within a previous specific time period before the specific time period.

3. The method according to claim 2, wherein before the user-commodity purchase relationship matrix is constructed, a behavior marking module marks whether the first subset of users perform a specific behavior within a future specific time period after the specific time period based on the first subset of users to generate behavior data of the corresponding users.

4. The method according to claim 2, wherein the first subset of users comprises a second subset of users, which is a subset of users who only perform a single shopping behavior within the specific time period, who do not perform a shopping behavior within a previous specific time period before the specific time period, and who do not perform a specific behavior within a future specific time period after the specific time period.

5. The method according to claim 2, wherein the user-commodity purchase relationship matrix is constructed based on the first subset of users and the specifications of the commodities purchased by all the customers.

6. The method according to claim 4, wherein the user-commodity purchase relationship matrix is constructed based on the second subset of users and the specifications of the commodities purchased by all the customers.

7. The method according to claim 3 or 4, wherein the probability that a commodity is bad is further calculated based on the behavior data.

8. The method according to claim 3 or 4, wherein the specific behavior is one of a shopping behavior, a login behavior or a marking-as-favorite behavior.

9. The method according to claim 1, wherein the identifying module adopts an algorithm adapted to a sparse matrix environment to resolve the probability that a commodity is bad.

10. The method according to claim 1, wherein the identifying module adopts a methodology of a binomial distribution hypothesis inspection to identify the bad commodities.

11. A system for identifying bad commodities based on user purchase behaviors, the system comprising:
a user screening module configured to select from a customer transaction system a set of users who only perform a single shopping behavior within a specific time period, and
construct a user-commodity purchase relationship matrix based on specifications of the commodities purchased by all the customers and the set of users;
an identifying module configured to calculate a probability that a commodity is bad based on the user-commodity purchase relationship matrix to identify bad commodities, and generate a list of bad commodities based on the identified bad commodities; and
a pushing module configured to push the generated list of bad commodities to a commodity intervention system.

12. The system according to claim 11, wherein the set of users comprises a first subset of users, which is a subset of users who only perform a single shopping behavior within the specific time period and who do not perform a shopping behavior within a previous specific time period before the specific time period.

13. The system according to claim 12, further comprising a marking module configured to mark, before the user screening module constructs the user-commodity purchase relationship matrix, whether the first subset of users perform a specific behavior within a future specific time period after the specific time period based on the first subset of users to generate behavior data of the corresponding users.

14. The system according to claim 12, wherein the first subset of users comprises a second subset of users, which is a subset of users who only perform a single shopping behavior within the specific time period, who do not perform a shopping behavior within a previous specific time period before the specific time period, and who do not perform a specific behavior within a future specific time period after the specific time period.

15. The system according to claim 12, wherein the user-commodity purchase relationship matrix is constructed based on the first subset of users and the specifications of the commodities purchased by all the customers.

16. The system according to claim 14, wherein the user-commodity purchase relationship matrix is constructed based on the second subset of users and the specifications of the commodities purchased by all the customers.

17. The system according to claim 13 or 14, wherein the probability that a commodity is bad is further calculated based on the behavior data.

18. The system according to claim 13 or 14, wherein the specific behavior is one of a shopping behavior, a login behavior or a marking-as-favorite behavior.

19. The system according to claim 11, wherein the identifying module adopts an algorithm adapted to a sparse matrix environment to resolve the probability that a commodity is bad.

20. The system according to claim 11, wherein the identifying module adopts a methodology of a binomial distribution hypothesis inspection to identify the bad commodities.
